# EUROPÄISCHE PATENTSCHRIFT

(11) **EP 2 373 522 B1**
(45) Veröffentlichungstag und Bekanntmachung des Hinweises auf die Patenterteilung: **01.10.2014**
(21) Anmeldenummer: 09801933.4
(22) Anmeldetag: 08.12.2009
(51) Int. Cl.: B60R 13/02

(54) **DACHHIMMEL MIT UMGEFORMTER, UMLAUFENDER OBERKANTE**
ROOF LINING HAVING FORMED, PERIPHERAL UPPER EDGE
HABILLAGE DE TOIT MUNI D'UN BORD SUPERIEUR FAÇONNE ROTATIF

(30) Priorität: 08.12.2008 DE 102008060678
(43) Veröffentlichungstag der Anmeldung: 12.10.2011
(73) Patentinhaber: Johnson Controls Interiors GmbH & Co. KG, 47929 Grefrath (DE)
(72) Erfinder: MAILÄNDER, Ralf, L-9357 Bettendorf (LU); LEINENBACH, Jochen, 66292 Riegelsberg (DE); WALLSCHEID, Georg, 42719 Solingen (DE)
(74) Vertreter: Trinks, Ole
(86) Internationale Anmeldenummer: PCT/EP2009/008760
(87) Internationale Veröffentlichungsnummer: WO 2010/066402

(56) Entgegenhaltungen:
- WO-A-99/43518
- DE-U1- 7 709 851
- US-A- 4 718 714
- US-A- 5 108 147
- US-A1- 2005 006 929

## Beschreibung

Die vorliegende Erfindung betrifft einen Dachhimmel mit Ausnehmungen, sowie ein Verfahren zu dessen Herstellung und dessen Einbau.

Dachhimmel als Innenverkleidungsteile von Fahrzeugdächem werden für jedes Fahrzeug in verschiedenen Varianten hergestellt. Neben dem sogenannten Volldach- oder Normaldachhimmel, der die komplette darüber liegende Dachinnenseite vollständig verkleidet, existieren auch Varianten mit einem oder mehreren Dachöffnungen. Diese z.B. mit Schiebedach oder Panoramadach angebotenen Varianten müssen im Verbindungsbereich zu der, in der Regel dahinter befindlichen Schiebedachkassette, einen ästhetischen Abschluss bilden und fest mit dieser Einheit verbunden sein.

Die Verbindung des Dachhimmels mit der Schiebedachkassette wird in den kostengünstigen Fahrzeugen oft mit einem Keder realisiert. In Mittelklasse- oder Oberklassefahrzeugen genügt dieser Kederabschluss den Ansprüchen an die Ästhetik nicht. Oftmals wird dort das Dekormaterial mit Textil, hochwertigem Vlies oder Alcantara über eine Schnittkante des Dachhimmelsubstrats umgebugt. Bei der Vorderkante und der Schiebedachkante ist es üblich das Dekor komplett um ca. 180° umzubugen, damit das Dekor auf der Rückseite festgeklebt werden kann. Die Verbindung zur Schiebedacheinheit wird in den überwiegenden Fällen über einen Schiebedachrahmen realisiert, in welchem sich Klammern befinden, die bei der Montage des Dachhimmels in Öffnungen der Schiebedachkassette eingeklippt werden. Seltener findet man Klebe- oder Klettverbindungen. Forderungen der Kunden nach einem Dekorumbug mit einem Dekormaterial lassen sich in der Regel nur über 2-Schritt Fertigungsverfahren für den Dachhimmel realisieren. Hierfür wird zunächst der Dachhimmelträger ohne Dekor hergestellt und zumindest an den Kanten beschnitten, über die später der Dekorumbug erfolgen soll. Diese Dachhimmel sind vergleichsweise teuer, bzw. das Verfahren zu deren Herstellung bzw. Einbau, vergleichsweise aufwändig.

Die DE 7 709 851 U1 offenbart einen Dachhimmel gemäß dem Oberbegriff des Anspruchs 1.

Es war deshalb die Aufgabe der vorliegenden Erfindung einen Dachhimmel, ein Verfahren zu dessen Herstellung, sowie ein Verfahren zu dessen Einbau zur Verfügung zu stellen, das einfach und kostengünstig durchzuführen ist. Der eingebaute Dachhimmel muss darüber hinaus hohen ästhetischen Anforderungen genügen.

Gelöst wird die Aufgabe mit einem Dachhimmel gemäß Anspruch 1. Die vorliegende Erfindung betrifft einen Dachhimmel, d.h. die Innenverkleidung des Daches eines Fahrzeuges, der eine Ausnehmung insbesondere für ein Schiebedach und/oder ein Panoramadach aufweist. Bei dem erfindungsgemäßen Dachhimmel handelt es sich vorzugsweise um ein dreidimensionales Formteil. Ein derartiger Dachhimmel besteht zumindest aus einem Trägermaterial, beispielsweise einem thermoplastischen und/oder duroplastischen Material und/oder einem faserartigen Material. In der Regel ist dieses Trägermaterial mit einer Dekorschicht überzogen, die auf der Sichtseite des Dachhimmels angeordnet ist.

Höher gezogen im Sinne der Erfindung bedeutet, von der Fahrgastzelle weg gebogen.

Erfindungsgemäß weist dieser Dachhimmel nun im Randbereich der Ausnehmung eine höher gezogene Ausformung auf, d.h. das Trägermaterial und das darauf befindliche Dekormaterial sind im Randbereich der Ausnehmung von der Sichtseite weg, plastisch verformt. Es ergibt sich dadurch eine, vorzugsweise um die gesamte Ausnehmung umlaufende, von der Sichtseite weggebogene Fläche, die Umbugkante. Besonders bevorzugt beträgt der Umformwinkel 80° bis 125°. Durch die höher gezogene Ausformung ist keinerlei Kante für den Fahrzeuginsassen zu sehen, die nachträglich kaschiert werden muss.

Gemäß der Erfindung schließt sich an die höher gezogene Ausformung ein Umbug an. Dieser Umbug wird in die höher gezogene Ausformung eingeformt. Diese Ausführungsform des erfindungsgemäßen Dachhimmels hat den Vorteil, dass der Dachhimmel nach der ersten Formgebung hinterschnittfrei ist, d.h. leichter entformbar ist. Vorzugsweise wird die höher gezogene Ausformung während, besonders bevorzugt gleichzeitig mit, der Formgebung des restlichen Dachhimmels in diesen eingeformt. Durch die höher gezogene Ausformung und den Umbug ergibt sich eine C-förmige oder U-förmige Kante im Randbereich der Ausnehmung, die zur Befestigung des Dachhimmels an der Ausnehmung und/oder zur Aufnahme eines Verstärkungsprofils, beispielsweise eines Schiebedachrahmens eingesetzt werden kann.

Vorzugsweise beträgt der Verformungswinkel zwischen der höher gezogenen Ausformung und dem Umbug 80 bis 180°.

Vorzugsweise steht das Material der höher gezogenen Ausformung und/oder des Umbugs als Fläche über das Fertigmaß der Ausnehmung hinaus in diese hinein. Dieses Material wird dann in weiteren Arbeitsschritten einmal oder mehrmals umgebogen.

Vorzugsweise ist der Dachhimmel mit der höher gezogenen Ausformung und dem Umbug einstückig vorgesehen.

In einer weiteren bevorzugten Ausführungsform weist der erfindungsgemäße Dachhimmel einen Schiebedachrahmen auf. Dieser Schiebedachrahmen wird vorzugsweise form-, kraft- und/oder stoffschlüssig an dem Dachhimmel, insbesondere an dessen Rückseite angeordnet. Die höher gezogene Ausformung und/oder der Umbug können diesen Schiebedachrahmen zumindest teilweise umschließen. Der Schiebedachrahmen erstreckt sich vorzugsweise über den gesamten Umfang der Ausnehmung.

Vorzugsweise wird der Dachimmel an der Fahrzeugkarosserie und/oder an einem Schiebedachrahmen festgeklemmt. Dafür ist besonders bevorzugt ein Klemmrahmen vorgesehen.

Gemäß der Erfindung sind an dem Umbug Form- und/oder Kraftschlussmittel, insbesondere Rastmittel, vorgesehen, die besonders bevorzugt mit einer Ausnehmung an einer Schiebedachkassette zusammenwirken. Durch bewegen des Dachhimmels in Montagerichtung rasten die Mittel vorzugsweise in die Ausnehmungen ein und werden besonders bevorzugt leicht geklemmt und/oder vorgespannt, so dass sie sich nicht lösen und keine Geräuschentwicklung stattfindet.

Des weiteren wird die Aufgabe mit einem Verfahren zur Herstellung des erfinderischen Dachhimmels gemäß Anspruch 11 gelöst.

Die Ausführungen zu dem erfindungsgemäßen Dachhimmel gelten für die erfindungsgemäßen Verfahren gleichermaßen und umgekehrt.

Vorzugsweise erfolgt die Einformung der höher gezogenen Ausformung während der Formgebung des Dachhimmels. Besonders bevorzugt erfolgt diese Formgebung unter Einwirkung von Wärme und/oder Druck, bei dem insbesondere das Trägermaterial des Formhimmels plastisch verformt wird.

Vorzugsweise erfolgt nach der höher gezogenen Ausformung eine weitere Formgebung, ein Umbug, insbesondere dadurch, dass das Material des Dachhimmels erwärmt und dann plastisch verformt wird. Der Umbug erfolgt insbesondere dadurch, dass die äußere Kante der höher gezogenen Ausformung umgebogen wird.

Vorzugsweise wird mit der höher gezogenen Ausformung und/oder dem Umbug ein Schiebedachrahmen umformt. Vorzugsweise wird der Schiebedachrahmen stoffschlüssig mit dem Dachhimmel, insbesondere mit der höher gezogenen Ausformung und/oder dem Umbug verbunden. Dies erfolgt ganz besonders bevorzugt dadurch, dass der Schiebedachrahmen zunächst großflächig mit der Formhimmelrückseite und/oder dem unteren Teil der höher gezogenen Ausformung verklebt wird und danach der obere Teil der höher gezogenen Ausformung insbesondere bis zu dessen Fließgrenze oder darüber hinaus erwärmt und dann mechanisch umgebugt wird, wodurch er mit dem Schiebedachrahmen verklebt wird. Ein weiterer Gegenstand der vorliegenden Erfindung ist ein Verfahren zur Montage des Dachhimmels gemäß Anspruch 12.

Die für einen Erfindungsgegenstand gemachten Ausführungen gelten für die anderen Erfindungsgegenstände gleichermaßen.

Im folgenden werden die Erfindungen anhand der Figuren 1 - 7 erläutert. Diese Erläuterungen sind lediglich beispielhaft und schränken den allgemeinen Erfindungsgedanken nicht ein. Die Erläuterungen gelten für alle Erfindungsgegenstände gleichermaßen.
- **Figur 1**: zeigt einen Dachhimmel mit einer höher gezogenen Ausformung.
- **Figur 2**: zeigt einen Dachhimmel mit der höher gezogenen Ausformung und einem Umbug,
- **Figur 3**: zeigt den Einbau des Dachhimmel in die Ausnehmung in der Fahrzeugkarosserie.
- **Figur 4**: zeigt das Klemmen des Dachhimels mit einem Klemmrahmen.
- **Figur 5**: zeigt einen erfindungsgemäßen Dachhimmel vor dem Umbug.
- **Figur 6**: zeigt einen erfindungsgemäßen Dachhimmel nach dem Umbug.
- **Figur 7**: zeigt den Dachhimmel gemäß den Figuren 5 und 6 nach seiner Montage an einer Schiebedachkassette.

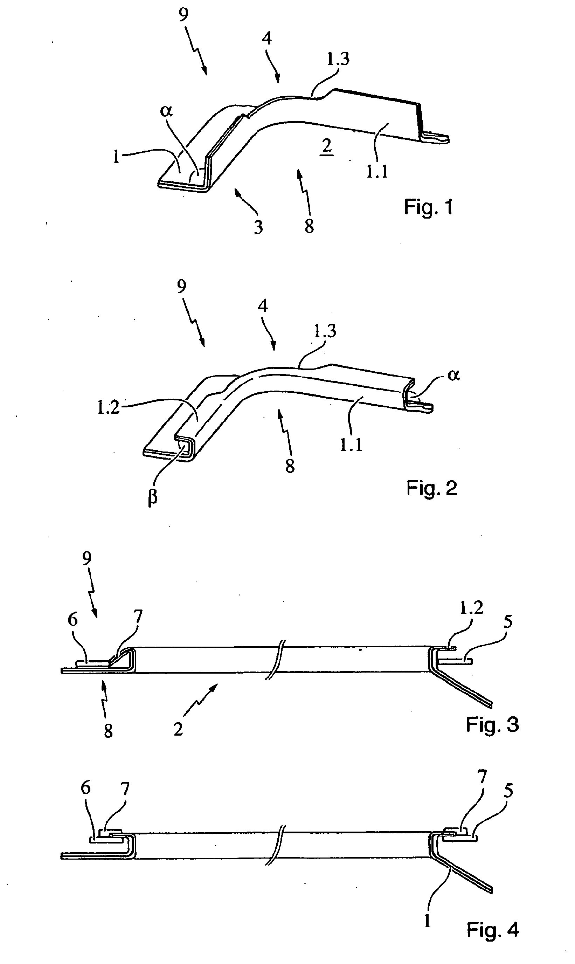

Figur 1 zeigt einen Ausschnitt eines Dachhimmels im Bereich einer Ausnehmung 2. Diese Ausnehmung 2 ist beispielsweise für ein Schiebedach oder für ein Panoramadach vorgesehen. Der Dachhimmel 1 weist eine Sichtseite 8, die in Richtung des Fahrzeuginnenraums gerichtet ist und eine Rückseite 9, die in Richtung der Fahrzeugkarosserie ausgerichtet ist, auf. Erfindungsgemäß weist der Dachhimmel 1 nun im Randbereich 3 der Ausnehmung 2 eine höher gezogenen Ausformung 1.1 auf. In diesem Bereich ist der Fahrzeughimmel, der beispielsweise aus einem thermoplastischen und/oder duroplastischen Trägermaterial aus einer Dekorschicht auf der Sichtseite besteht, um ca. 90° nach innen, von der Sichtseite weg, gebogen. Diese höher gezogene Ausformung 1.1 wird vorzugsweise bereits bei der Formgebung des Dachhimmels in diesen plastisch eingeformt. Danach wird vorzugsweise ein Schnitt 1.3, beispielsweise ein Entlastungsschnitt, im oberen Randbereich der höher gezogenen Ausformung 1.1, beispielsweise in den Ecken 4 der Ausnehmung 2 angeordnet. Dieser Schnitt 1.3 ist insbesondere für eine einfachere Montage des Dachhimmels an der Ausnehmung und/oder für den Umbug vorteilhaft, weil dann im Bereich der Ecken keine Materialagglomeration stattfindet.

Danach wird, wie in Figur 2 ersichtlich, ein Umbug 1.2 in den oberen Randbereich der höher gezogenen Ausformung 1.1 eingeformt, so dass der Dachhimmel im Randbereich 3 der Ausnehmung 2 eine im Wesentlichen C-förmig oder U-förmig gestaltete Kontur einnimmt. Der Umbug 1.2 erfolgt vorzugsweise mit einem Thermoumbugverfahren.

Die Montage im Schiebedachbereich erfolgt, wie in Figur 3 dargestellt, durch Einschieben, vorzugsweise bis zum Anschlag des Dachhimmels 1 in Längsrichtung und durch anschließendes Anheben und Überbrücken der seitlichen Umbugbereiche 1.2 über den hinteren Rand 6, beispielsweise einer Ausnehmung einer Schiebedachkassette. Dies ist durch die Flexibilität des Formhimmelmaterials und das Fehlen des starren Schiebedachrahmens möglich. Ein etwas kürzerer Beschnitt 1.3 in den Radienbereichen 4 begrenzt die Fläche und ermöglicht das Einschieben des Dachhimmels in Längsrichtung ohne störende Überschneidungen in den Radien. In Längsrichtung ist das Maß von der Innenkante des Schiebedachprofils bis zur Beschnittkante der gegenüberliegenden, umgeformten Fläche 1.2 gleich oder geringfügig größer ausgelegt als die Öffnung 2 der Schiebedachkassette in dieser Richtung. So kann nach Überspringen der seitlichen Bereiche und der hinteren Kante der Dachhimmel zurückgeschoben und positioniert werden. Bei der Montage wird der Umbugbereich1.2 durch den Randbereich der Ausformung 2 elastisch verformt und springen dann in ihre ursprüngliche Form zurück.

Figur 4 zeigt das Klemmen des Dachhimmels 1 an der Ausnehmung 2 mit einem Klemmrahmmen 7. Diese Klemmung erfolgt vorzugsweise nachdem der Dachhimmel im Bereich der Ausnehmung 2 positioniert worden ist. Unterschiedliche Flankenwinkel des Dachhimmels werden dabei ausgeglichen und es ist kein Unterschied zur heutigen Lösung mehr zu erkennen. Der Dachhimmel ist besser zu recyceln. Der Dachhimmel kann in einem Arbeitsschritt eingebaut werden. Die aufwändige Kaschierung der Schnittkante entfällt.

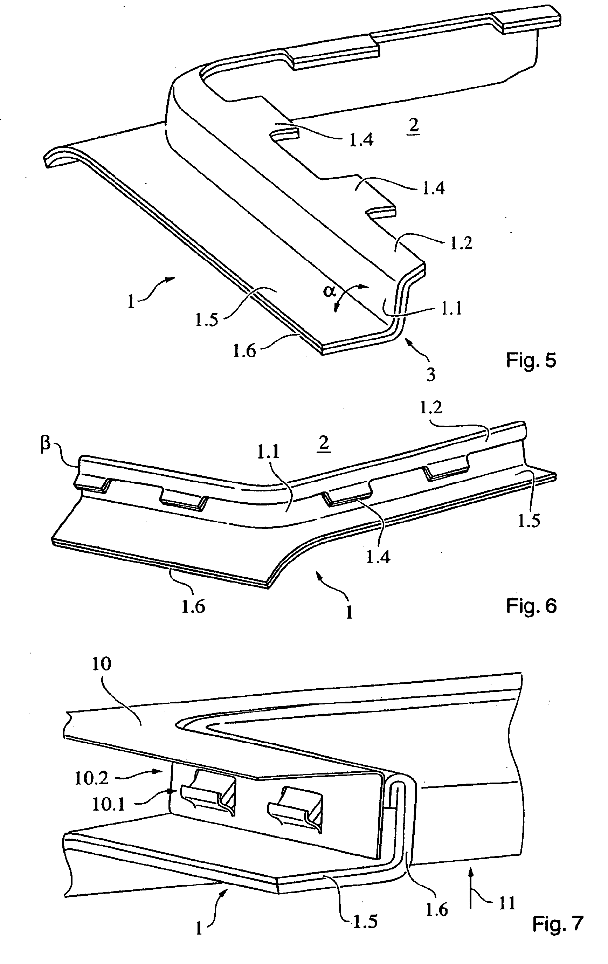

Figur 5 zeigt den erfindungsgemäßer Dachhimmel. In dem vorliegenden Fall sind an dem Umbug 1.2, an dem freien Ende, Vorsprünge 1.4 angeordnet, die, wie anhand der Figuren 6 und 7 ersichtlich, im eingebauten Zustand als Form- und/oder Kraftschlussmittel insbesondere Rastmittel dienen. Diese Vorsprünge können an zwei oder vier Umbugen 1.2 vorgesehen sein, wobei sich vorzugsweise jeweils zwei Umbuge 1.2 gegenüberliegen. Ansonsten wird auf die Ausführung und den voranstehenden Figuren, insbesondere zu Figur 1 und Figur 2, verwiesen. Der Fachmann erkennt, dass die Vorsprünge auch durchgehend ausgeführt sein können. In diesem Fall sind die Ausnehmungen, in die die Rastmittel eingreifen entsprechend ausgeführt.

Figur 6 zeigt den Dachmittel gemäß Figur 5, wobei in dieser Darstellung der Umbug der Umbugfläche 1.2 vorgenommen worden ist. Diese ist bezogen auf die erste höher gezogene Ausformung 1.1 um 180° gebogen. Dabei wurden die Vorsprünge 1.4 leicht nach Innen, d. h. von der Ausnehmung 2 in Richtung der Schiebedachkassette 10 (vgl. Figur 7) weggebogen, so dass sie von der Ausformung 1.1 abstehen. Es ist jedoch auch möglich, dass die Vorsprünge nicht frei stehen, sondern nach Ausbildung des Vorsprung wieder in Richtung der Formhimmelrückseite zurückgebogen und ggf. mit dieser verbunden werden. Diese Ausführungsform ist vorteilhaft, weil die Einbautoleranz sonst von der Länge des Vorsprungs abhängig ist.

Durch den Umbug wird folglich die Rastfunktion mit dem Trägermaterial des Dachhimmels realisiert.

Figur 7 zeigt den erfindungsgemäßen Dachhimmel im eingebauten Zustand. Wie durch den Pfeil 11 symbolisiert, wird der Dachhimmel in eine Schiebedachkassette hineingeschoben, Die Rastmittel 1.4 werden dabei von der Schiebdachkassette in Richtung der Fläche 1.1 gedrückt. Sobald die Rastmittel 1.4 die Ausnehmung 10.2 erreicht haben, springen sie in diese hinein und verrasten den Dachhimmel an der Schiebedachkassette. Die Ausarbeitungen 10.1, hier Ausstanzungen 10.1 dienen dabei als Anschlags- und/oder Vorspannfläche um den Dachhimmel sicher in der Schiebedachkassette10 zu fixieren und um gegebenenfalls Geräuschentwicklung zu vermeiden. Wie bereits ausgeführt werden die Laschen 10.1 aus der Schiebedachkassette beispielsweise ausgestanzt und dann beispielsweise umgeformt.

Durch den Umbug wird folglich die Rastfunktion mit dem Trägermaterial des Dachhimmels realisiert.

### Bezugszeichenliste:

- 1: Dachhimmel
- 1.1: erste höher gezogene Ausformung
- 1.2: Umbug, Umbugbereich
- 1.3: Schnitt, Entlastungsschnitt
- 1.4: Form-/Kraftschlussmittel, Rastmittel
- 1.5: Trägermaterial
- 1.6: Dekormaterial
- 2: Ausnehmung
- 3: Randbereich
- 4: Eckbereich
- 5: Vorderkante der Schiebedachkassettenausnehmung
- 6: Rand, hintere Kante der Schiebedachkassettenausnehmung
- 7: Klemmrahmen
- 8: Sichtsite
- 9: Rückseite
- 10: Schiebedachkassette
- 10.1: Ausarbeitung, Ausstanzung, Laschen
- 10.2: Ausnehmung
- 11: Montagerichtung

## Patentansprüche

1. Dachhimmel (1), der ein Trägermaterial (1.5) mit mindestens einer Ausnehmung (2) aufweist, wobei das Trägermaterial im Randbereich (3) der Ausnehmung eine höher gezogene Ausformung (1.1) aufweist, wobei sich an die höher gezogene Ausformung (1.1) ein eingeformter Umbug (1.2) des Trägermaterials anschließt, **dadurch gekennzeichnet, dass** an dem freien Ende des Umbugs (1.2) Vorsprünge (1.4) angeordnet sind, die im eingebauten Zustand als Form- und/oder Kraftschlussmittel, insbesondere als Rastmittel (1.4) dienen.

2. Dachhimmel nach Anspruch 1, **dadurch gekennzeichnet, dass** der Umformwinkel (α) zwischen 80 und 180° beträgt.

3. Dachhimmel nach Anspruch 2, **dadurch gekennzeichnet, dass** der Umformwinkel (β) zwischen der höher gezogenen Ausformung und dem Umbug zwischen 80 und 180° beträgt.

4. Dachhimmel nach einem der vorstehenden Ansprüche, **dadurch gekennzeichnet, dass** das Material der höher gezogenen Ausformung (1.1) und des Umbugs (1.2) als Fläche über das Fertigmaß der Ausnehmung hinaus ausgebildet ist.

5. Dachhimmel nach einem der vorstehenden Ansprüche, **dadurch gekennzeichnet, dass** sich die höher gezogene Ausformung (1.1) und der Umbug (1.2) über den ganzen Umfang der Ausnehmung (2) erstrecken.

6. Dachhimmel nach einem der vorstehenden Ansprüche, **dadurch gekennzeichnet, dass** er im Eckbereich (4) Entlastungsschnitte aufweist.

7. Dachhimmel nach einem der vorstehenden Ansprüche, **dadurch gekennzeichnet, dass** er einstückig gefertigt ist.

8. Dachhimmel nach einem der vorstehenden Ansprüche, **dadurch gekennzeichnet, dass** er einen Schiebedachrahmen aufweist, der vorzugsweise im Umbugbereich angeordnet ist.

9. Dachhimmel nach einem der vorstehenden Ansprüche, **dadurch gekennzeichnet, dass** er an der Fahrzeugkarosserie und/oder der Schiebedachkassette geklemmt ist.

10. Dachhimmel nach einem der voranstehenden Ansprüche, **dadurch gekennzeichnet, dass** die Mittel (1.4) mit einer Ausnehmung (10.2) an einer Schiebedachkassette (10) zusammenwirkt.

11. Verfahren zur Herstellung des Dachhimmels mit einer Ausnehmung (2), einer höher gezogenen Ausformung (1.1) und einem eingeformten Umbug (1.2) nach einem der vorstehenden Ansprüche, **dadurch gekennzeichnet, dass** das Material der höher gezogenen Ausformung (1.1) und des Umbugs (1.2) als Fläche über das Fertigmaß der Ausnehmung heraus ausgebildet, die höher gezogenen Ausformung (1.1) dann ohne Hinterschnitt eingeformt und die höher gezogenen Ausformung (1.1) dann beschnitten wird und danach der Umbug (1.2) mit einem Trägermaterial (1.5) erfolgt.

12. Verfahren zur Montage des Dachhimmels mit einer Ausnehmung (2), einer höher gezogenen Ausformung (1.1) und einem Umbug (1.2) nach einem der Ansprüche 1-10, **dadurch gekennzeichnet, dass** die Rastmittel (1.4), die an dem freien Ende des Umbugs vorgesehen sind, in Ausnehmungen (10.2) einer Schiebedachkassette (10) eingerastet werden.

13. Verfahren nach Anspruch 12, **dadurch gekennzeichnet, dass** der Dachhimmel anschließend geklemmt wird.

## Claims

1. A roof lining (1) comprising a base (1.5) having at least one recess (2), wherein the base has a raised molding (1.1) in the edge region (3) of the recess (2), wherein a molded foldback (1.2) of the base follows the raised molding (1.1), **characterized in that** projections (1.4) are arranged on the free end of the foldback (1.2) which serve as positive and/or frictional connecting means, particularly as locking means (1.4), when installed.

2. The roof lining according to claim 1, **characterized in that** the forming angle (α) is between 80 and 180°.

3. The roof lining according to claim 2, **characterized in that** the forming angle (β) between the raised molding and the foldback is between 80 and 180°.

4. The roof lining according to any one of the preceding claims, **characterized in that** the material of the raised molding (1.1) and the foldback (1.2) is formed as a surface in excess of the finished size of the recess.

5. The roof lining according to any one of the preceding claims, **characterized in that** the raised molding (1.1) and the foldback (1.2) span the entire circumference of the recess (2).

6. The roof lining according to any one of the preceding claims, **characterized in that** the edge region (4) comprises relief cuts.

7. The roof lining according to any one of the preceding claims, **characterized in that** it is of integral configuration.

8. The roof lining according to any one of the preceding claims, **characterized in that** it comprises a sliding roof frame preferably arranged in the area of the foldback.

9. The roof lining according to any one of the preceding claims, **characterized in that** it is secured to the vehicle body and/or the sliding roof cassette.

10. The roof lining according to any one of the preceding claims, **characterized in that** the means (1.4) interacts with a recess (10.2) on a sliding roof cassette (10).

11. A method for manufacturing the roof lining comprising a recess (2), a raised molding (1.1) and a molded foldback (1.2) according to any one of the preceding claims, **characterized in that** the material of the raised molding (1.1) and the foldback (1.2) is formed as a surface in excess of the finished size of the recess, the raised molding (1.1) is then formed without an undercut, the raised molding (1.1) is then cut and the foldback (1.2) thereafter results with a base (1.5).

12. A method for mounting the roof lining comprising a recess (2), a raised molding (1.1) and a molded foldback (1.2) according to any one of claims 1-10, **characterized in that** the locking means (1.4) provided at the free end of the foldback engage into recesses (10.2) of a sliding roof cassette (10).

13. The method according to claim 12, **characterized in that** the roof lining is subsequently secured.

## Revendications

1. Habillage de toiture (1) qui comprend un matériau porteur (1, 5) avec au moins un évidement (2), dans lequel le matériau porteur présente dans la zone de bordure (3) de l'évidement une conformation (1.1) étirée vers le haut, et un rabattement vers l'intérieur (1.2) du matériau porteur fait suite à la conformation (1.1) étirée vers le haut, **caractérisé en ce que** des saillies (1.4) sont agencées à l'extrémité libre du rabattement (1, 2), lesquelles servent, dans la situation montée, d'organes de coopération de formes et/ou de coopération de forces, en particulier d'organes d'enclenchement. (1.4).

2. Habillage de toiture selon la revendication 1, **caractérisé en ce que** l'angle de déformation (□) est entre 80 et 180 °.

3. Habillage de toiture selon la revendication 2, **caractérisé en ce que** l'angle de déformation (□) entre la conformation étirée vers le haut et le rabattement est entre 80 et 180 °.

4. Habillage de toiture selon l'une des revendications précédentes, **caractérisé en ce que** le matériau de la conformation étirée vers le haut (1.1) et du rabattement (1, 2) est réalisé sous forme de surface au-delà de la dimension finale de l'évidement.

5. Habillage de toiture selon l'une des revendications précédentes, **caractérisé en ce que** la conformation étirée vers le haut (1.1) et le rabattement (1.2) s'étendent sur la totalité de la périphérie de l'évidement (2).

6. Habillage de toiture selon l'une des revendications précédentes, **caractérisé en ce qu'**il comporte des découpes de décharge dans la zone de coin (4).

7. Habillage de toiture selon l'une des revendications précédentes, **caractérisé en ce qu'**il est fabriqué d'un seul tenant.

8. Habillage de toiture selon l'une des revendications précédentes, **caractérisé en ce qu'**il comporte un cadre de toit coulissant, qui est agencé de préférence dans la zone du rabattement.

9. Habillage de toiture selon l'une des revendications précédentes, **caractérisé en ce qu'**il est coincé contre la carrosserie du véhicule et/ou sur la cassette du toit coulissant.

10. Habillage de toiture selon l'une des revendications précédentes, **caractérisé en ce que** les moyens (1.4) coopèrent avec un évidement (10.2) sur une cassette de toit coulissant (10).

11. Procédé pour la production de l'habillage de toiture avec un évidement (2), une conformation étirée vers le haut (1.1) et un rabattement vers l'intérieur (1.2) selon l'une des revendications précédentes, **caractérisé en ce que** le matériau de la conformation étirée vers le haut (1.1) et du rabattement (1.2) est réalisé sous forme de surface au-delà de la dimension finale de l'évidement, la conformation étirée vers le haut (1.1) est alors mise en forme sans contre-dépouille, et la conformation étirée vers le haut (1.1) est alors découpée et le rabattement (1.2) est ensuite effectué avec un matériau porteur (1.5).

12. Procédé pour le montage de l'habillage de toiture avec un évidement (2), une conformation étirée vers le haut (1.1) et un rabattement (1.2) selon l'une des revendications 1 à 10, **caractérisé en ce que** les moyens d'enclenchement (1.4) qui sont prévus à l'extrémité libre du rabattement sont enclenchés dans des évidements (10.2) d'une cassette de toit coulissant (10).

13. Procédé selon la revendication 12, **caractérisé en ce que** l'habillage de toiture est ensuite coincé.
